# EUROPEAN PATENT SPECIFICATION

(11) **EP 3 122 209 B1**
(45) Date of publication and mention of the grant of the patent: **13.03.2024**
(21) Application number: 15715851.0
(22) Date of filing: 24.03.2015
(51) Int. Cl.: A46B 3/20, A46B 5/00, A46B 9/00, A46D 3/00

(54) **BRUSH HEAD ARRANGEMENTS**
BÜRSTENKOPFANORDNUNGEN
AGENCEMENTS DE TÊTE DE BROSSE

(30) Priority: 25.03.2014 US 201461970169 P; 25.03.2014 US 201461970157 P; 25.03.2014 US 201461970011 P; 25.03.2014 US 201461970076 P; 03.04.2014 US 201461974760 P; 06.06.2014 US 201462008762 P; 16.07.2014 US 201462025039 P
(43) Date of publication of application: 01.02.2017
(73) Proprietor: Koninklijke Philips N.V., 5656 AG Eindhoven (NL)
(72) Inventor: DENGLER, Evan Dak Wah, 5656 AE Eindhoven (NL); GODDARD, Gregory Russ, 5656 AE Eindhoven (NL); ROSE, Heidi, 5656 AE Eindhoven (NL)
(74) Representative: Philips Intellectual Property & Standards
(86) International application number: PCT/IB2015/052149
(87) International publication number: WO 2015/145352

(56) References cited:
- WO-A1-98/12948
- WO-A1-2004/080238

## Description

### Field of the Invention

The present disclosure is directed generally to an improved brush head, and more particularly, to the arrangement, structure, securement, and resulting function of bristle tufts in a brush head.

### Background

WO 2004/080238 A1 discloses a method and a device for producing a brush, in particular a toothbrush comprising a brush head that has a bundle of bristles.

Brush heads used with manual and power brushes, which have bristle tufts contained within retention or support rings seated within a brush head, are known. The retention rings serve to secure respective bristle tufts within the brush head. Typical retention rings used in manual and power brushes to hold bristle tufts in the brush head have a hollow circular shape, having both an interior and exterior non-tapered circular circumference. Each bristle tuft is inserted into the hollow interior of a different retention ring, and the bristles in the retention ring are then secured to a backing, forming the tooth brush head. In some instances, the retention rings are not firmly secured to the backing of the brush head, such that bristles are not at an optimal angle for brushing, or the ring and bristle tuft or tuft strands are loose within the brush head. As such, a related problem with such conventional retention rings is that under the dynamic conditions of motion induced by the power brush operation, for example, over time the retention rings, bristle tufts or tuft strands tend to separate from the brush head.

Accordingly, there is a need in the art for a better retention ring, improved tuft arrangement, and improved method of securing the retention rings and bristle tufts to the brush head, especially for use with power brushes.

### Summary of the Invention

The invention is defined by the independent claims. The dependent claims define advantageous embodiments.

The present disclosure is directed to an inventive arrangement, structure, securement, and resulting function of bristle tufts in a brush head. Various embodiments and implementations herein are directed to a brush head formed from an elastomeric matrix and including a variety of retention rings of differing sizes and shapes disposed therein that are tapered from bottom to top, including a variety of non-circular and non-cylindrical shapes, where an exterior wall and an interior wall of at least one of the retention rings can be of different shapes. Each retention ring includes a bristle tuft retained therein. Additional embodiments can include bristle tufts of varying lengths extending from the brush head, where the top/free portions of the bristle tufts are collectively arranged to form a non-planar functional brush surface.

Using the various embodiments and implementations herein, securement of the retention rings within the brush head and securement of the bristle tufts within the retention rings can be substantially improved by providing retention rings with non-circular exterior wall shapes. The angled wall portions of the various non-circular exterior wall shapes/geometry provide additional surface angles (as compared with cylindrical/circular shapes) to provide improved adherence/securement (i.e., improved adherence per increased contact between the exterior wall of the retention ring and the elastomeric matrix). The taper of the exterior wall also provides improved adherence between the retention ring and the elastomeric matrix. Additionally, tapering of the interior wall of the retention ring provides better securement of the bristle tuft positioned therein. These features also provide for improved and varying arrangements of bristles in the brush head. Further, using the various embodiments and implementations herein, improved and more complete teeth cleaning can be achieved based on, for example, the improved strength and flexibility of the brush head and of the bristle tuft and retention ring collective assembly, and the variety of shapes, sizes and lengths of the bristle tufts.

The improved brush head disclosed and described herein can be used with any manual or power brush device. One example of a power brush device that the improved brush head can be used with is any Sonicare^{®} device available from Philips. This oral care device is based upon an actuator with a reciprocating brush head including bristles to provide an effective cleaning of a user's teeth.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the invention.
FIG. 1A is a perspective top view schematic representation of a brush head assembly in accordance with an embodiment.
FIG. 1B is a perspective bottom/back side view schematic representation of a brush head assembly of FIG. 1A in accordance with an embodiment.
FIG. 2A is a top view schematic representation of a brush head assembly in accordance with an embodiment.
FIG. 2B is a sectional view schematic representation along A-A of brush head assembly shown in FIG. 2A in accordance with an embodiment.
FIG. 2C is a top view schematic representations of a particular retention ring of the brush head assembly shown in FIG. 2A in accordance with an embodiment.
FIG. 2D is a top view schematic representations of another particular retention ring of the brush head assembly shown in FIG. 2A in accordance with an embodiment.
FIG. 3A is a side view schematic representation of a brush head assembly in accordance with an embodiment.
FIG. 3B is an opposite side view schematic representation (as compared to FIG. 3A) of a brush head assembly in accordance with an embodiment.
FIG. 4 is a proximal view schematic representation of a brush head assembly in accordance with an embodiment.
FIG. 5 is a top perspective view schematic representation showing webbing links connecting retention rings of different sizes and shapes in accordance with an embodiment.
FIG. 6 is a side view schematic representation of a retention ring with a bristle tuft retained therein and including an exterior wall and interior wall, each of which includes a taper, in accordance with an embodiment.

### Detailed Description of Embodiments

The present disclosure describes various embodiments of an improved brush head for dental cleaning. More generally, Applicants have recognized and appreciated that it would be beneficial to provide a brush head formed from of an elastomeric matrix and including a variety of retention rings of differing sizes and shapes disposed therein for improved adherence per increased contact between an exterior wall of a particular retention ring and the brush head, and between an interior wall of the retention ring and a bristle tuft positioned therein. Additionally, customizing the shape of the retention ring can allow for additional bristle movement, and thus enhanced cleaning ability. As such, Applicants recognized and appreciated that it would be beneficial to provide a brush head and a bristle tuft and retention ring collective assembly with improved strength and flexibility, and bristle tufts with a variety of shapes and sizes (due in part to the differing sizes and shapes of the retention rings, including a variety of non-circular and non-cylindrical shapes), and lengths for improved and more complete teeth cleaning.

Additionally, in another related arrangement, retention rings can be connected through a separate webbing or matrix of webbing links to further stiffen a elastomeric matrix (in which the retention rings are seated) to improve retention ring and bristle tuft retention within a elastomeric matrix and to increase stiffness and/or create certain areas of flexibility in the elastomeric matrix, as well as to simplify manufacturing over the use of individual retention rings.

A particular goal of utilization of the embodiments of the present disclosure is the ability of the embodiments of the improved brush head to provide improved adherence between the exterior wall of the retention ring and the brush head and between the interior wall of the retention ring and the bristle tuft positioned therein, and improved arrangement of bristles in the brush head. Another goal is to provide improved and more complete teeth cleaning.

In view of the foregoing, various embodiments and implementations are directed to an apparatus in which a brush head is formed from an elastomeric matrix and includes a variety of retention rings of differing sizes and shapes disposed therein, where each retention ring includes a bristle tuft retained therein, and where an exterior wall and an interior wall of at least one of the retention rings can be different shapes. In these embodiments, the brush head can also include bristle tufts of varying lengths extending from the brush head, where the top portions of the bristle tufts are collectively arranged to form a non-planar functional brush surface.

### Brush Head Assembly

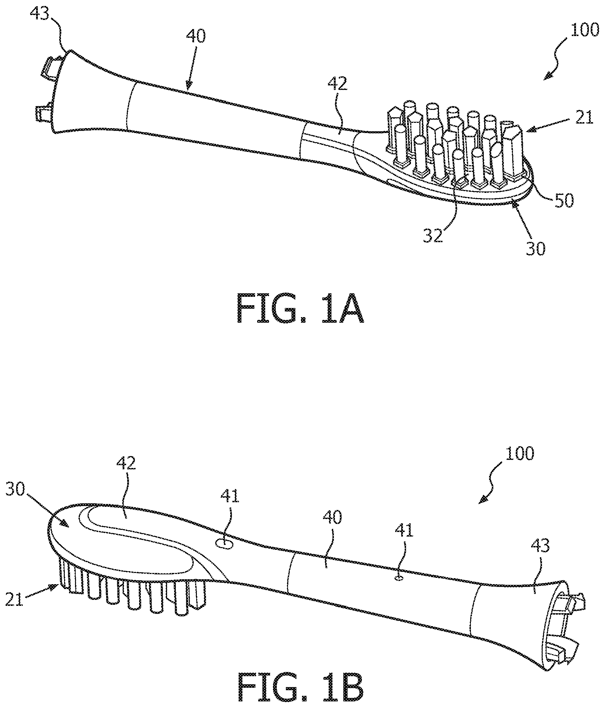

Referring to FIG. 1A, in one embodiment, a perspective assembled top view schematic representation of a brush head assembly 100 is provided. More particularly, the brush head assembly 100 can include, but is not limited to, an elastomeric matrix 30 including a first surface 32 that is preferably substantially planar (but is not required to be planar). A plurality of individual bristle tufts 21, each of which includes a plurality of bristle strands, are retained within plurality of individual retention rings 50 disposed in the elastomeric matrix 30. The plurality of individual bristle tufts 21 are shown extending from the first surface 32 of the elastomeric matrix 30. A distal portion 42, called a platen, of a neck 40 is also at least partially enclosed in and connected to the elastomeric matrix 30.

Referring to FIG. 1B, in one embodiment, a perspective assembled bottom/back side view schematic representation of a brush head assembly 100 is provided. The distal platen portion 42 of the neck 40 is shown connected to and at least partially embedded in the elastomeric matrix 30, opposite the proximal portion 43 of the neck 40. The proximal portion 43 of the neck 40 can be coupled to any manual brush shaft, or, more preferably, to any actuator and drive shaft (not shown) made or suitable for powered oral care devices now known or to be developed. At least one gate 41 is shown on the back side of the neck 40. The gate 41 is used for the injection molding of the elastomeric matrix 30, described further below.

According to an embodiment, the elastomeric matrix 30 is preferably made from a flexible thermoplastic elastomer (TPE), and the retention rings 50 are preferably made from thermoplastic polymer such as polypropylene. Each of the neck 40 and the retention rings are preferably made from a material with a higher elastic modulus value than the elastomeric matrix 30, although the neck and the retention rings can be made of different materials from each other.

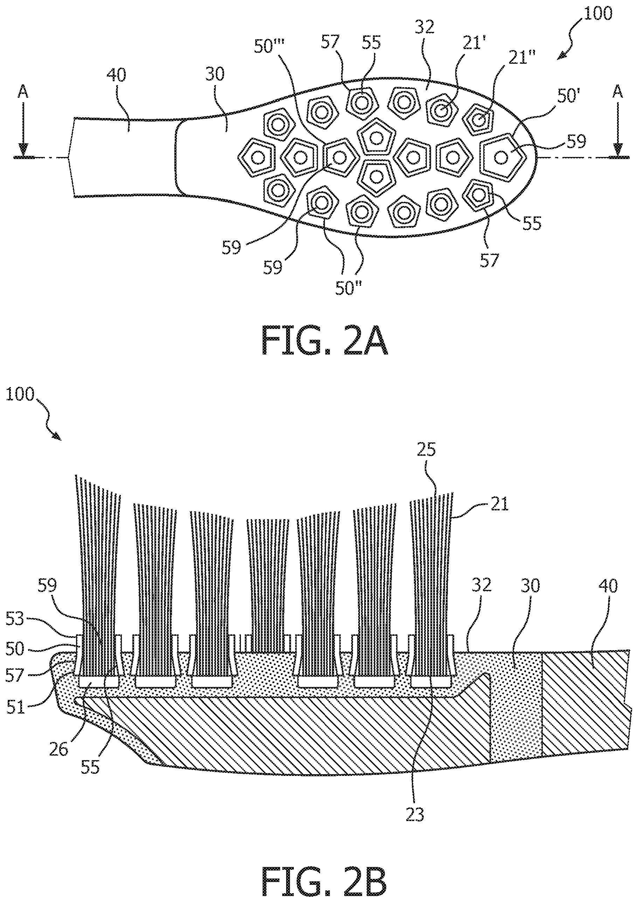

Referring to FIG. 2A, in one embodiment, a top view schematic representation of a brush head assembly 100 is provided. An elastomeric matrix 30 having a distal end 36 thereof is shown. A plurality of retention rings 50, each having an interior space 59 and disposed in the elastomeric matrix 30 are also shown. More particularly, an improved arrangement of separate individual bristle tufts (e.g., 21' - 21‴, etc.) are shown retained within separate individual retention rings (e.g., 50' - 50‴, etc.), respectively, which extend out from the first surface 32 of the elastomeric matrix 30. The particular number and arrangement (spacing and placement) of the retention rings 50 and bristle tufts 21 in the elastomeric matrix 30 can vary, and can be a function of a number of variables including the type of cleaning desired, the specifics of teeth and gums (structure, location, and surface configuration) to be accessed and cleaned, and the desired flexibility or stiffness of portions of the brush head 100. Additionally, the sizes and shapes of the respective interior spaces 59 of the individual retention rings can vary. For example, the interior space of retention ring 50' positioned at the distal end 36 of the brush head can be larger than the other interior spaces of any of the other individual retention rings (as shown in FIG. 2A), thus, forming the largest bristle tuft as measured by area at its free end per the largest number of bristle strands contained within retention ring 50'. Further, in one preferable embodiment, the interior spaces 59 of the retention rings (50") along the outer perimeter of the of the brush head are shown to be smaller than the interior spaces 59 of the retention rings in the interior of the brush head (e.g., 50‴). As such, the number of bristle strands that fit within the interior spaces of each of the retention rings can vary and be a function of the size of the interior space of each individual retention ring.

Referring to FIG. 2B, in one embodiment, a sectional view schematic representation along A-A of brush head assembly 100 shown in FIG. 2A is provided. This sectional view shows several individual retention rings 50 disposed in the elastomeric matrix 30. Each individual retention ring includes first end 51, second end 53 (which is positioned closer to the first surface 32 of the elastomeric matrix than the first end 51), the interior wall 55 forming an interior space 59 (each of which is filled by a bristle tuft), and an exterior wall 57. Additionally, each of the plurality of bristle tufts includes a proximal end 23 and a free end 25. Each individual bristle tuft shown in FIG. 2B includes a head portion 26 at its proximal end 23. The head portion 26 is positioned adjacent to the first end 51 of the retaining ring, and has an area larger than the first end of the retention ring within which the bristle tuft is retained. This head portion 26 assists with retaining the bristle tuft within the retention ring.

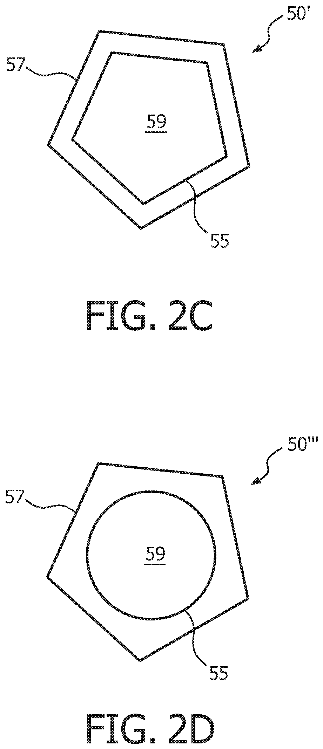

Referring to FIGS. 2C-2D, in one embodiment, top view schematic representations of certain retention rings of the of brush head assembly 100 are shown. More specifically, FIG. 2C shows retention ring 50' with an interior space 59 and with a central longitudinal axis 111. The geometrical shape of each of the exterior wall 57 and the interior wall 55 of retention ring 50' is non-circular, and, in particular, pentagonal in shape. FIG. 2D shows retention ring 50‴ with an interior space 59 with a central longitudinal axis 111. Similar to retention ring 50', the shape of the exterior wall 57 of retention ring 50‴ is non-circular, and, in particular, pentagonal in shape. However, the interior wall 55 of the retention ring 50‴ is circular (i.e., the interior wall 55 and exterior wall 57 of retention ring 50‴ are different shapes). An embodiment contemplates arrangements of individual retention rings in an elastomeric matrix 30 with any combination of interior wall 55 and exterior wall 57 shape combinations (e.g., circular and non-circular; or two different non-circular shapes, respectively), and a variety of any combination of interior space 59 area sizes.

The shape and area size of the interior space 59 of a retention ring, and thus the bristle tuft retained therein, are dictated by the shape and size of the interior wall. For example, an interior wall 55 shape that is non-circular will assist in the formation of a non-circular bristle tuft, and an interior wall 55 shape that is generally circular will assist in the formation of a generally circular/cylindrical bristle tuft. See, for example, the shape of bristle tuft 21" (non-circular) vs. the shape of bristle tuft 21' (generally circular/round/cylindrical) in FIG. 2A. These shapes and sizes can be chosen based on the need to obtain an optimal bristle arrangement for improved brushing.

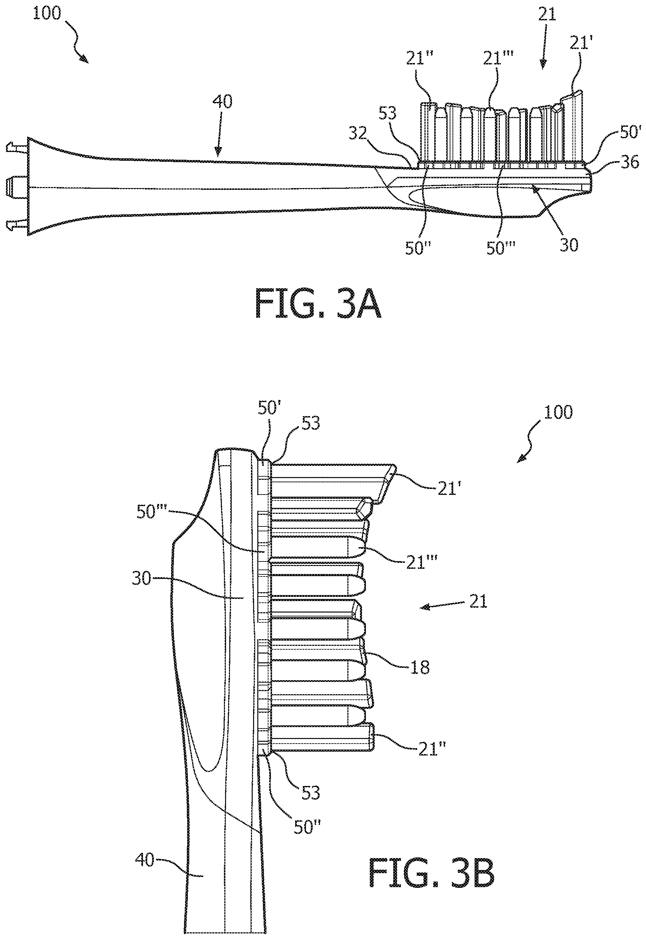

Referring to FIGS. 3A-3B, in one embodiment, opposite side view schematic representations of a brush head assembly 100 are provided. More specifically, FIG. 3A shows a side-profile of a non-planar "lounge-shaped" arrangement of bristle tufts 21 (as seen from the distal end 36 of the brush head). As shown, bristle tuft 21' positioned adjacent to the distal end 36 extends a further distance from the first surface 32 than any of the other bristle tufts. FIG. 3B shows example lengths of bristle tuft 21' (10.20 mm), bristle tuft 21" (8.40 mm) and bristle tuft 21‴ (7.70 mm) as measured from the respective second ends 53 of each of the respective retention rings 50', 50" and 50‴.

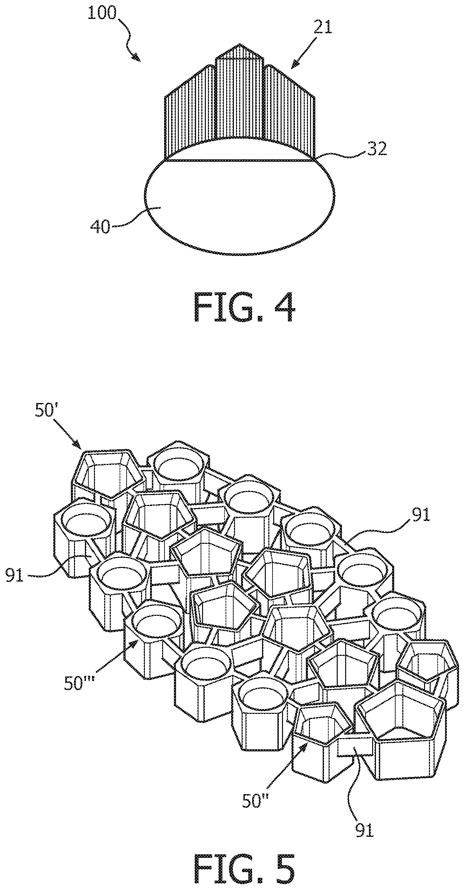

Referring to FIG. 4, in one embodiment, a proximal view schematic representation of a brush head assembly 100 is provided. This view shows a radial trim profile arrangement of bristle tufts 21, where the bristle tufts positioned adjacent to the outer perimeter of the brush head extend a shorter distance from the first surface 32 than the bristle tufts positioned in the central portion of the brush head.

According to an embodiment, at least some of the plurality of retention rings can be connected by a webbing or matrix of webbing links as shown in FIG. 5. In one embodiment, a top perspective view schematic representation of webbing links 91 connecting a certain example arrangement of retention rings - 50'-50ⁿ - is provided. More specifically, this embodiment shows links 91 connecting each of the retention rings as also shown in and previously discussed with respect to FIG. 2A. The webbing links can serve to further stiffen an elastomeric matrix 30 (in which the retention rings are seated) and to improve retention ring and bristle tuft retention within the elastomeric matrix 30. While the arrangement shown in FIG. 5 shows all of the retention rings connected by webbing, it can be appreciated that as few as a total of two retention rings can be connected by webbing links. The webbing links and retention rings can be formed of a material different from the elastomeric matrix, and preferably is a material that is stiffer (material that includes a higher elastic modulus value) than the elastomeric matrix 30.

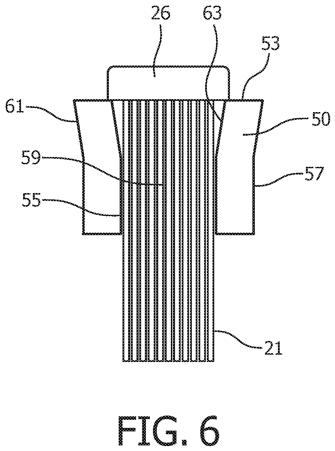

Referring to FIG. 6, in one embodiment, a side view schematic representation of an example of one of the plurality of retention rings 50 including an interior space 59 with one of the plurality of bristle tufts 21 retained therein, and including an exterior wall 57 and interior wall 55, each of which includes a taper, is shown. More particularly, retention ring 50 is shown with an exterior wall taper 61 and an interior wall taper 63, which differ from each other. For example, the interior wall taper can be more pronounced starting from the second end 53 of the retention ring 50 to about between a quarter of the length of the retention ring and the middle of the retention ring 50. FIG. 6 also shows a head portion 26 at the proximal end of the bristle tuft 21, where the head portion 26 is positioned outside of and adjacent to the second end 53 of retention ring 50 and has an area larger than the second end 53 of the retaining ring. Many other embodiments and combinations of the exterior wall taper 61 and the interior wall taper 63 are possible. For example, the "top" portion (starting at the second end 53 of the retention ring 50) of each of the interior wall taper 63 and the exterior wall taper 61 can be wider to accommodate the head portion 26.

### Methods of Brush Head Assembly Manufacture

In manufacturing the brush head assembly, a plurality of retention rings 50 are provided, each of which includes an interior wall 55 forming an interior space 59 and an exterior wall 57. Retention rings 50 can be any of the shapes, sizes, and/or configurations described or otherwise envisioned herein. For example, the plurality of retention rings 50 can be the same size and shape, or multiple different sizes and shapes (including an interior wall and an exterior wall of the same or different shapes, including non-circular shapes), and can include an interior wall and/or an exterior wall with a taper. In one embodiment two or more of the plurality of retention rings 50 are connected or at least partially interconnected by a webbing or network of webbing links 91 to improve retention ring and bristle tuft retention within the brush head, although a webbing link 91 is not necessary, and a plurality of individual retention rings 50 can be used. According to an alternative embodiment, for example, the plurality of retention rings 50 can be held in place by a tuft ring, or by some other support mechanism. The tuft ring or other support mechanism can be removed prior to one or more downstream steps, or can form part of the completed brush head assembly.

A bristle tuft 21 (which comprises a plurality of bristle strands) is inserted into each of the plurality of retention rings 50. Each of the bristle tufts 21 includes a proximal end 23 and a free end 25, with the proximal end being inserted into the retention ring.

Heat is applied to the proximal end 23 of the plurality of bristle tufts 21 to create a proximal end head portion 26. Proximal end head portion 26 is the melted end of the bristle tuft 21. For example, the heat can be supplied by a heat source that comes into direct physical contact with the proximal end 23 of the bristle tufts. In addition the heat can be supplied by heated air or any of a variety of other heat sources. Note that in some embodiments, the heating of the proximal end 23 of the plurality of bristle tufts 21 can be done in conjunction with the step of applying the elastomeric matrix 30, below, depending on the chemical composition, and therefore the melting point, of the bristle tufts 21, and elastomeric matrix 30.

According to an embodiment, the heat applied is sufficiently hot enough and/or sufficiently long enough to also melt, at least partially, the retention ring 50 to the bristle tuft. This would further prevent individual bristles within bristle tuft 21 from escaping or moving around inside the retention ring.

The brush head neck 40 is then positioned to put the platen 42 in the proper location in relation to the retaining rings 50 with the bristle tufts 21 inserted, and the webbing links 91. For example, platen 42 is positioned just above head portion 26 of the bristle tufts 21 in the retaining rings 50. Platen 42 can be properly positioned using a mold, for example, or other positioning mechanism. This creates a space into which an elastomeric material can be injected.

An elastomeric material is molded into the space over the platen 42, the head portion 26 of the bristle tufts, and the retaining rings 50, as well as the webbing links 91 if they are present. The molded elastomeric material forms an elastomeric matrix 30. According to an embodiment, elastomeric matrix 30 is preferably made from a flexible thermoplastic elastomer, while the retaining rings are preferably made from thermoplastic polymer such as polypropylene. According to this embodiment, each of the platen 42 and the retaining rings 50 is made from a material with a higher elastic modulus than the elastomeric matrix 30. According to an embodiment (not shown), neck 40 and platen 42 of the brush head are inserted into a mold and block the egress of the elastomeric material from the mold cavity. As shown in FIG. 1B, neck 40 comprises one or more gates 41 which allows the molten elastomeric material to be injected into the cavity of the mold.

According to another embodiment, the retaining rings 50 have a higher melting temperature than bristle tufts 21. For example, if nylon is used for the bristle tufts, the melting temperature is approximately 213 °C. A higher temperature material is then used for the retaining rings 50, such as polyether ether ketone, which has a melting temperature of approximately 343 °C. Many other polymers are possible for the bristle tufts and the retaining rings, as long as the melting temperature disparity is properly configured. According to this embodiment, the bristle tufts are first properly positioned, and the proximal ends of the bristles are melted to form head portion 26. Then, the retaining rings 50 are positioned or formed, such as molding, around the positioned bristle tufts 21. For example, the retaining rings can be molded, inserted, or otherwise formed around the positioned bristle tufts. This allows the bristles to fuse and bond directly to the retaining rings, for example.

At an optional step of the method, not shown, after the brush head has been completely assembled, the free end 25 of one or more of the inserted bristle tufts 21 can be trimmed in order to provide a particular free end profile.

Other embodiments of brush head assembly 100 are possible, including other configurations bristle tufts 21, retention rings 50, and/or elastomeric matrix 30.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "having," "containing," "holding," and the like are to be understood to be open-ended, i.e., to mean including but not limited to.

## Claims

1. A brush head (100) having a distal end 36, the brush head comprising:
an elastomeric matrix (30) comprising a first surface (32);
a plurality of retention rings (50) disposed in the elastomeric matrix, each of which comprises a first end (51), a second end (53) positioned closer to the first surface of the elastomeric matrix than the first end, an interior wall (55) forming an interior space (59) with a central longitudinal axis (111), and an exterior wall (57), wherein:
the interior wall of at least a first retention ring (50") of the plurality of retention rings is generally circular in shape;
the interior wall of at least a second retention ring (50') of the plurality of retention rings is generally non-circular in shape;
the exterior wall of each of the plurality of retention rings is generally non-circular in shape; and
at least one of the interior wall or the exterior wall of each of the plurality of retention rings comprises a taper (61, 63) extending from the first end to the second end in a direction toward the central longitudinal axis;
a plurality of bristle tufts (21), each of which is inserted into the interior space of one of the plurality of retaining rings, comprises a plurality of bristle strands, has a proximal end (23) and a free end (25), and is retained at its proximal end by the formation of a head portion of the bristle tuft adjacent to the exterior of the second end of the one of the plurality of retaining rings; and
a neck (40), a distal platen portion (42) of which is connected to and at least partially embedded in the proximal end of the elastomeric matrix, wherein the neck is formed of a material with a higher elastic modulus value than the elastomeric matrix.

2. The brush head of claim 1, wherein the non-circular shape of the interior wall of at least a second retention ring or of the exterior wall is generally pentagonal.

3. The brush head of claim 1, wherein the elastomeric matrix is made from a thermoplastic elastomer.

4. The brush head of claim 3, wherein at least one of the plurality of retention rings is made from a thermoplastic polymer.

5. The brush head of claim 4, wherein the thermoplastic polymer is polypropylene.

6. The brush head of claim 1, wherein the plurality of retention rings are formed of a material with a higher elastic modulus value than the elastomeric matrix.

7. The brush head of claim 1, wherein the first surface is substantially planar, and at least two of the plurality of bristle tufts extend from the first surface at different distances away from the first surface.

8. The brush head of claim 7, wherein a first bristle tuft (21') and a second bristle tuft (21") extend a further distance from the first surface than a third bristle tuft (21‴) positioned between the first and second bristle tufts.

9. The brush head of claim 7, wherein a first bristle tuft (21') and a second bristle tuft (21") extend a shorter distance from the first surface than a third bristle tuft (21‴) positioned between the first and second bristle tufts.

10. The brush head of claim 1, wherein a first bristle tuft (21) of the plurality of bristle tufts is positioned and retained within a first retention ring (50) and further comprises a head portion (26) at the proximal end of the first bristle tuft, the head portion being positioned adjacent to the first end of the first retention ring and having an area larger than the area of a plane (60) of the interior space surrounded and created by the first end of the first retention ring.

11. The brush head of claim 1, wherein the plurality of retention rings comprise at least two retention rings with two different interior space sizes, respectively.

12. The brush head of claim 1, wherein at least one of the plurality of retention rings are connected by a webbing link (91) to at least one other retention ring of the plurality of retention rings.

13. A method for manufacturing a brush head assembly (100), the method comprising the steps of:
providing a plurality of polypropylene bristle tuft retention rings (50), each of which comprises a first end (51), a second end (53) positioned closer to the first surface (32) of the elastomeric matrix (30) than the first end, an interior wall (55) forming an interior space (59) with a central longitudinal axis (111), and an exterior wall (57) that is generally non-circular in shape, wherein:
the interior wall of at least a first retention ring (50") of the plurality of retention rings is generally circular in shape; and
the interior wall of at least a second retention ring (50') of the plurality of retention rings is generally non-circular in shape;
at least one of the interior wall or the exterior wall of each of the plurality of retention rings comprises a taper (61, 63) extending from the first end to the second end in a direction toward the central longitudinal axis; and
the plurality of bristle tuft retention rings are at least partially interconnected by a network of webbing links (91);
inserting a respective nylon bristle tuft (21) into each of the bristle tuft retention rings (50);
applying heat to each bristle tuft proximal end (23) at a temperature sufficient to at least partially melt the bristle tuft proximal end and create a proximal head portion (26) adjacent to the exterior of the second end of each of the plurality of retaining rings;
positioning a platen (42) portion of a neck (40) of the brush head in relation to the proximal head portions, wherein the positioning of the platen portion of the neck defines a space in relation to the proximal head portions for injection of a thermoplastic elastomer; and
injecting through a gate (41) in the neck the thermoplastic elastomer into the space to create an elastomeric matrix (30) that at least partially encompasses the platen and the proximal head portions.

## Patentansprüche

1. Ein Bürstenkopf (100) mit einem distalen Ende 36, wobei der Bürstenkopf umfasst: eine Elastomermatrix (30), die eine erste Oberfläche (32) umfasst; eine Vielzahl von Halteringen (50), die in der Elastomermatrix angeordnet sind und von denen jeder ein erstes Ende (51), ein zweites Ende (53), das näher an der ersten Oberfläche der Elastomermatrix positioniert ist als das erste Ende, eine Innenwand (55) einen Innenraum (59) mit einer Mittellängsachse (111) und einer Außenwand (57) bilden, wobei: die Innenwand von mindestens einem ersten Haltering (50") der mehreren Halteringe ist im Allgemeinen kreisförmig geformt; die Innenwand von mindestens einem zweiten Haltering (50') der mehreren Halteringe ist im Allgemeinen nicht kreisförmig geformt; die Außenwand jedes der mehreren Halteringe ist im Allgemeinen nicht kreisförmig geformt; Und mindestens eine Innenwand oder Außenwand jedes der mehreren Halteringe weist eine Verjüngung (61, 63) auf, die sich vom ersten Ende zum zweiten Ende in Richtung der Mittellängsachse erstreckt; mehrere Borstenbüschel (21), die jeweils in den Innenraum eines der mehreren Halteringe eingesetzt sind, mehrere Borstenstränge umfassen, ein proximales Ende (23) und ein freies Ende (25) aufweisen, und wird an seinem proximalen Ende durch die Bildung eines Kopfabschnitts des Borstenbüschels neben der Außenseite des zweiten Endes des einen der mehreren Halteringe gehalten; Und einen Hals (40), dessen distaler Plattenabschnitt (42) mit dem proximalen Ende der Elastomermatrix verbunden und zumindest teilweise darin eingebettet ist, wobei der Hals aus einem Material mit einem höheren Elastizitätsmodulwert als die Elastomermatrix gebildet ist.

2. Bürstenkopf nach Anspruch 1, wobei die nicht kreisförmige Form der Innenwand mindestens eines zweiten Halterings oder der Außenwand im Allgemeinen fünfeckig ist.

3. Bürstenkopf nach Anspruch 1, wobei die Elastomermatrix aus einem thermoplastischen Elastomer besteht.

4. Bürstenkopf nach Anspruch 3, wobei mindestens einer der mehreren Halteringe aus einem thermoplastischen Polymer hergestellt ist.

5. Bürstenkopf nach Anspruch 4, wobei das thermoplastische Polymer Polypropylen ist.

6. Bürstenkopf nach Anspruch 1, wobei die mehreren Halteringe aus einem Material mit einem höheren Elastizitätsmodulwert als die Elastomermatrix gebildet sind.

7. Bürstenkopf nach Anspruch 1, wobei die erste Oberfläche im Wesentlichen eben ist und sich mindestens zwei der mehreren Borstenbüschel von der ersten Oberfläche in unterschiedlichen Abständen von der ersten Oberfläche erstrecken.

8. Bürstenkopf nach Anspruch 7, bei dem sich ein erstes Borstenbüschel (21') und ein zweites Borstenbüschel (21") in einer weiteren Entfernung von der ersten Oberfläche erstrecken als ein drittes Borstenbüschel (21‴), das zwischen der ersten und der ersten Oberfläche positioniert ist zweite Borstenbüschel.

9. Bürstenkopf nach Anspruch 7, wobei sich ein erstes Borstenbüschel (21') und ein zweites Borstenbüschel (21") über eine kürzere Distanz von der ersten Oberfläche erstrecken als ein drittes Borstenbüschel (21'''), das zwischen der ersten und der ersten Oberfläche positioniert ist zweite Borstenbüschel.

10. Bürstenkopf nach Anspruch 1, wobei ein erstes Borstenbüschel (21) der Vielzahl von Borstenbüscheln in einem ersten Haltering (50) positioniert und gehalten wird und außerdem einen Kopfabschnitt (26) am proximalen Ende davon umfasst erstes Borstenbüschel, wobei der Kopfabschnitt neben dem ersten Ende des ersten Halterings positioniert ist und eine Fläche aufweist, die größer ist als die Fläche einer Ebene (60) des Innenraums, der vom ersten Ende des ersten Halterings umgeben und geschaffen wird.

11. Bürstenkopf nach Anspruch 1, wobei die mehreren Halteringe mindestens zwei Halteringe mit jeweils zwei unterschiedlichen Innenraumgrößen umfassen.

12. Bürstenkopf nach Anspruch 1, wobei mindestens einer der mehreren Halteringe durch eine Gurtverbindung (91) mit mindestens einem anderen Haltering der mehreren Halteringe verbunden ist.

13. Verfahren zur Herstellung einer Bürstenkopfbaugruppe (100), wobei das Verfahren die folgenden Schritte umfasst: Bereitstellen mehrerer Polypropylen-Borstenbüschel-Halteringe (50), von denen jeder ein erstes Ende (51) und ein zweites Ende (53) umfasst, das näher an der ersten Oberfläche (32) der Elastomermatrix (30) positioniert ist als das erste Ende, eine Innenwand (55), die einen Innenraum (59) mit einer zentralen Längsachse (111) bildet, und eine Außenwand (57), die im Allgemeinen eine nicht kreisförmige Form hat, wobei: die Innenwand von mindestens einem ersten Haltering (50") der mehreren Halteringe ist im Allgemeinen kreisförmig geformt; Und die Innenwand von mindestens einem zweiten Haltering (50') der mehreren Halteringe ist im Allgemeinen nicht kreisförmig geformt; mindestens eine der Innenwände oder der Außenwand jedes der mehreren Halteringe weist eine Verjüngung (61, 63) auf, die sich vom ersten Ende zum zweiten Ende in Richtung der Mittellängsachse erstreckt; Und die mehreren Borstenbüschel-Halteringe sind zumindest teilweise durch ein Netzwerk aus Gurtbandgliedern (91) miteinander verbunden; Einsetzen eines entsprechenden Nylonborstenbüschels (21) in jeden der Borstenbüschel-Halteringe (50); Aufbringen von Wärme auf jedes proximale Ende (23) des Borstenbüschels bei einer Temperatur, die ausreicht, um das proximale Ende des Borstenbüschels zumindest teilweise zu schmelzen und einen proximalen Kopfabschnitt (26) neben der Außenseite des zweiten Endes jedes der mehreren Halteringe zu erzeugen; Positionieren eines Plattenabschnitts (42) eines Halses (40) des Bürstenkopfs in Bezug auf die proximalen Kopfabschnitte, wobei die Positionierung des Plattenabschnitts des Halses einen Raum in Bezug auf die proximalen Kopfabschnitte zum Einspritzen eines Thermoplasts definiert Elastomer; Und Einspritzen des thermoplastischen Elastomers durch eine Öffnung (41) im Hals in den Raum, um eine Elastomermatrix (30) zu erzeugen, die die Platte und die proximalen Kopfabschnitte zumindest teilweise umgibt.

## Revendications

1. Tête de brosse (100) ayant une extrémité distale 36, la tête de brosse comprenant: une matrice élastomère (30) comprenant une première surface (32); une pluralité d'anneaux de rétention (50) disposés dans la matrice élastomère, dont chacun comprend une première extrémité (51), une seconde extrémité (53) positionnée plus près de la première surface de la matrice élastomère que la première extrémité, une paroi intérieure (55) formant un espace intérieur (59) avec un axe longitudinal central (111), et une paroi extérieure (57), dans lequel: la paroi intérieure d'au moins un premier anneau de rétention (50") de la pluralité d'anneaux de rétention est de forme généralement circulaire; la paroi intérieure d'au moins un deuxième anneau de rétention (50') de la pluralité d'anneaux de rétention est de forme généralement non circulaire; la paroi extérieure de chacun de la pluralité d'anneaux de rétention est de forme généralement non circulaire; et au moins la paroi intérieure ou la paroi extérieure de chacun de la pluralité d'anneaux de retenue comprend un cône (61, 63) s'étendant de la première extrémité à la seconde extrémité dans une direction vers l'axe longitudinal central; une pluralité de touffes de poils (21), dont chacune est insérée dans l'espace intérieur de l'un de la pluralité d'anneaux de retenue, comprend une pluralité de brins de poils, a une extrémité proximale (23) et une extrémité libre (25), et est retenu à son extrémité proximale par la formation d'une partie de tête de la touffe de poils adjacente à l'extérieur de la seconde extrémité de l'un de la pluralité d'anneaux de retenue; et un col (40), dont une partie de plateau distale (42) est reliée à l'extrémité proximale de la matrice élastomère et est au moins partiellement intégrée dans celle-ci, le col étant formé d'un matériau ayant une valeur de module élastique supérieure à celle de la matrice élastomère.

2. Tête de brosse selon la revendication 1, dans laquelle la forme non circulaire de la paroi intérieure d'au moins un deuxième anneau de rétention ou de la paroi extérieure est généralement pentagonale.

3. Tête de brosse selon la revendication 1, dans laquelle la matrice élastomère est réalisée à partir d'un élastomère thermoplastique.

4. Tête de brosse selon la revendication 3, dans laquelle au moins un de la pluralité d'anneaux de rétention est réalisé à partir d'un polymère thermoplastique.

5. Tête de brosse selon la revendication 4, dans laquelle le polymère thermoplastique est du polypropylène.

6. Tête de brosse selon la revendication 1, dans laquelle la pluralité d'anneaux de rétention sont formés d'un matériau ayant une valeur de module élastique plus élevée que la matrice élastomère.

7. Tête de brosse selon la revendication 1, dans laquelle la première surface est sensiblement plane, et au moins deux de la pluralité de touffes de poils s'étendent à partir de la première surface à des distances différentes de la première surface.

8. Tête de brosse selon la revendication 7, dans laquelle une première touffe de poils (21') et une deuxième touffe de poils (21") s'étendent sur une plus grande distance de la première surface qu'une troisième touffe de poils (21‴) positionnée entre la première et deuxièmes touffes de poils.

9. Tête de brosse selon la revendication 7, dans laquelle une première touffe de poils (21') et une deuxième touffe de poils (21") s'étendent sur une distance plus courte de la première surface qu'une troisième touffe de poils (21‴) positionnée entre la première et deuxièmes touffes de poils.

10. Tête de brosse selon la revendication 1, dans laquelle une première touffe de poils (21) parmi la pluralité de touffes de poils est positionnée et retenue à l'intérieur d'un premier anneau de retenue (50) et comprend en outre une partie de tête (26) à l'extrémité proximale de la première touffe de poils, la partie tête étant positionnée de manière adjacente à la première extrémité du premier anneau de rétention et ayant une zone plus grande que la zone d'un plan (60) de l'espace intérieur entouré et créé par la première extrémité du premier anneau de rétention.

11. Tête de brosse selon la revendication 1, dans laquelle la pluralité d'anneaux de rétention comprend au moins deux anneaux de rétention avec deux tailles d'espace intérieur différentes, respectivement.

12. Tête de brosse selon la revendication 1, dans laquelle au moins un de la pluralité d'anneaux de rétention est relié par un lien en sangle (91) à au moins un autre anneau de rétention de la pluralité d'anneaux de rétention.

13. Procédé de fabrication d'un agencement de tête de brosse (100), le procédé comprenant les étapes suivantes: fournir une pluralité d'anneaux de rétention de touffes de poils en polypropylène (50), dont chacun comprend une première extrémité (51), une seconde extrémité (53) positionnée plus près de la première surface (32) de la matrice élastomère (30) que la première extrémité, une paroi intérieure (55) formant un espace intérieur (59) avec un axe longitudinal central (111), et une paroi extérieure (57) qui est de forme généralement non circulaire, dans laquelle: la paroi intérieure d'au moins un premier anneau de rétention (50") de la pluralité d'anneaux de rétention est de forme généralement circulaire; et la paroi intérieure d'au moins un deuxième anneau de rétention (50') de la pluralité d'anneaux de rétention est de forme généralement non circulaire; au moins l'une de la paroi intérieure ou de la paroi extérieure de chacun de la pluralité d'anneaux de retenue comprend un cône (61, 63) s'étendant de la première extrémité à la seconde extrémité dans une direction vers l'axe longitudinal central; et la pluralité d'anneaux de rétention de touffes de poils sont au moins partiellement interconnectés par un réseau de liens de sangle (91); insérer une touffe de poils en nylon respective (21) dans chacun des anneaux de retenue de touffe de poils (50); appliquer de la chaleur à chaque extrémité proximale de touffe de poils (23) à une température suffisante pour faire fondre au moins partiellement l'extrémité proximale de touffe de poils et créer une partie de tête proximale (26) adjacente à l'extérieur de la seconde extrémité de chacun de la pluralité d'anneaux de retenue; positionner une partie plateau (42) d'un col (40) de la tête de brosse par rapport aux parties de tête proximales, le positionnement de la partie plateau du col définissant un espace par rapport aux parties de tête proximales pour l'injection d'un thermoplastique élastomère; et injecter à travers une porte (41) dans le col l'élastomère thermoplastique dans l'espace pour créer une matrice élastomère (30) qui englobe au moins partiellement la platine et les parties de tête proximales.
